# EUROPEAN PATENT SPECIFICATION

(11) **EP 1 237 416 B1**
(45) Date of publication and mention of the grant of the patent: **25.08.2004**
(21) Application number: 00985728.5
(22) Date of filing: 14.12.2000
(51) Int. Cl.: A22C 25/16

(54) **METHOD AND APPARATUS FOR BONE REMOVING**
VERFAHREN UND APPARAT ZUM ENTFERNEN VON PINBONES
PROCEDE ET APPAREIL SERVANT A RETIRER LES ARETES

(30) Priority: 14.12.1999 IS 530199
(43) Date of publication of application: 11.09.2002
(73) Proprietor: CARNITECH A/S, DK-9530 Stovring (DK)
(72) Inventor: JACOBSEN, Preben, Holm, DK-9300 Saeby (DK); JACOBSEN, Bjarne, DK-9240 Nibe (DK); NORGAARD, Thomas, Kidde, DK-9800 Hjorring (DK)
(74) Representative: Strachan, Victoria Jane
(86) International application number: PCT/IB2000/002005
(87) International publication number: WO 2001/043553

(56) References cited:
- WO-A-94/10848
- WO-A-98/18335
- WO-A-99/52375
- DE-A- 2 641 427
- US-A- 2 857 621
- US-A- 5 911 621

## Description

### Technical field of the invention

The invention relates to method and apparatus for removing bones from meat, such as pin-bones from fish filets, in particular whitefish such as cod, comprising a conveyor for advancing the filets along and a bone removing unit for picking unwanted bones from a particular area of the meat as it is transported along the conveyor. A prior art method and apparatus is known from WO-A-99/52375.

### Background of the invention

Unwanted bones in fish filets such as whitefish in particular cod are one of the main concerns of fish processors. Unwanted bones, especially small bones on the dish of the customer or even worse if swallowed can have devastating effect for fish producers. Just one such instance can easily in an increasingly demanding market, result in a negative publicity and price and sales reduction which can seriously damaged a producer. Therefore it should not surprise anyone that fish producers all over the world spent much effort in finding bones and removing them. This is and has been very labour consuming operation. Some of the bones are difficult to find or their removal can be complicated without cutting away some portion of the fish meat. Larger part of fish processing is however being mechanised, e.g. de-heading, filleting and skin removing. Numerous apparatus and method have been introduced to either find bones in the meat or to remove the bones.

A related state of the art concerning the present invention is US Patent No. 5,525,101 issued June 11^{th} 1996 to Jan Söderlind of Sweden. The invention relates to a device for removing fish bones from fish meat or quills from killed poultry. The device comprises a cylinder provided with gripping means shaped as holes, a counter pressure element for achieving a squeezing function between the counter pressure element and the cylinder. The cylinder is mounted axially on the driving shaft for driving the cylinder. The cylinder is uncovered i.e., it is not contained in any apparatus housing. The counter pressure element is designed with a lip, bearing against the rotatably driven element, at least by means of an edge. The invention further relates to a cylinder for a device which is provided with a plurality of recesses running across its envelope surface in the longitudinal direction. The recesses have at least one sharp edge formed along the joining line between the envelope surface and the inner surface of the recess.

Although the above described prior art must be considered as huge step forward within the technology it has been proved that the device suffer from numerous disadvantage and has not worked as expected.

First of all the device is hand held, which result in that the accuracy and efficiency largely depends on the skills of the worker operating the device. As the device is hand held the possibilities to automate the process further is limited. It is demanding job to hold the device in the hand with its electrical power supply etc. Another disadvantage is that the rotational velocity of the cylinder and the advancing speed of the fish file has proven to be very important for the operation. It is not possible to control this ratio with the above described device.

Further from Danish Utility Model DK 1999 00226 U4 concern apparatus where the bone removal unit is movably hinged to a frame above a conveyor conveying fish filets to be processed. The bone removal unit is then elevated semi- or fully automatically toward the upwardly facing surface of the filets and driven over the entire surface of the filet. This has shown to be an effective method in for example processing salmon filets. However there are still number of disadvantages associated with this method. The main disadvantage is that the entire surface of the filet is brought into contact with the bone removing unit which can easily lead to damaging of the surface are. Further some bones are not necessarily located in the portion of the meat reachable by the removing unit (where the filet is thickest) . This is for instance the case for cod-fish where the pin bones are located in a area of the filet somewhat different from salmon e.g. where the filet is less thick.

### General description of the invention

It is the aim of the invention, to present apparatus and method for removal of bones from meat portions, such as fish filet, in an simple and effective manner. The removal of bones is effected with automatic adjustment of the apparatus according to the individual shape/requirement of each meat portion. This is achieved in a manner enabling the removal of bones from the fish filet without requiring a skilled person.

### Detailed description of the invention

The aim of the invention is achieved by the apparatus being unique in that the apparatus comprising a frame, a conveyor arranged on said frame for advancing said fish filet in a conveying direction, as well as supporting said filet during the bone removal process, a bone removing unit arranged on said frame, said bone removing unit being moveably hinged to the frame in the area above the conveyor for the purpose of bone removal as the filet is advanced along said conveyor, wherein the conveyor comprises: upwardly extending edge for elevating a particular area of the filet, above the conveyor surface, preferably the area corresponding to the spine, in such a manner the bone removal unit is allowed to be brought into contact to that particular area to remove the bones that are primarily located there in.

The invention is further unique as described in the characteristic part of the patent claims 2 - 11.

### Brief description of the drawings

In the following the invention is described in more details with reference to the drawings;- in which
Figure 1 shows a side view of the apparatus,
Figure 2 shows in more close-up details the arrangement of the bone removing unit,
Figure 3 shows the removal of a pin-bone from the fish filet,
Figure 4 shows side view of the apparatus, in particular one preferred embodiment of the elevation of the conveyor,
Figure 5 shows a perspective view of apparatus including one preferred embodiment of the elevation of the conveyor,
Figure 6 shows the apparatus seen from the in-feed section,
Figure 7 shows a specific long bone direction means and/or bone removal unit, and

### More detailed description of the drawings and one particular preferred embodiment of the invention

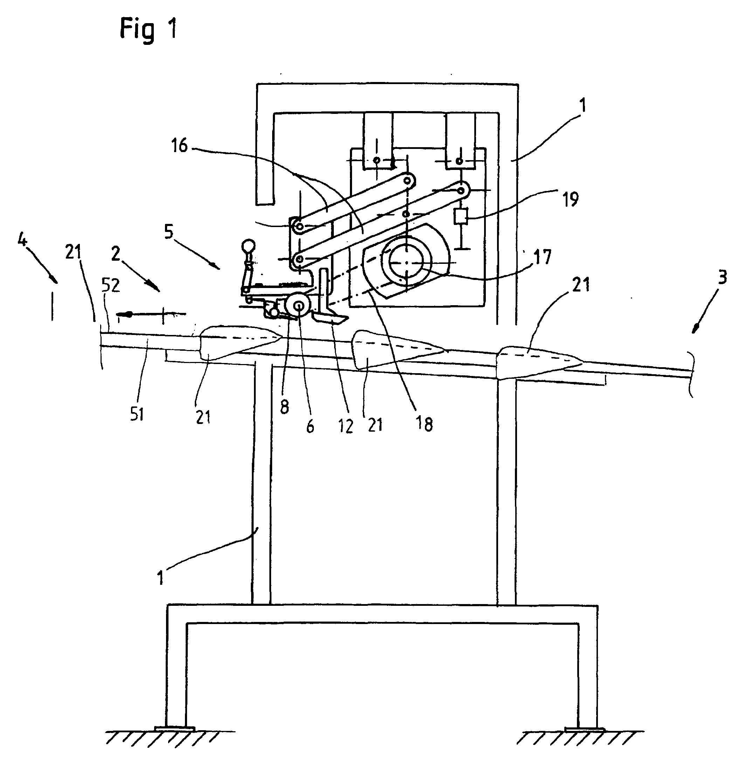

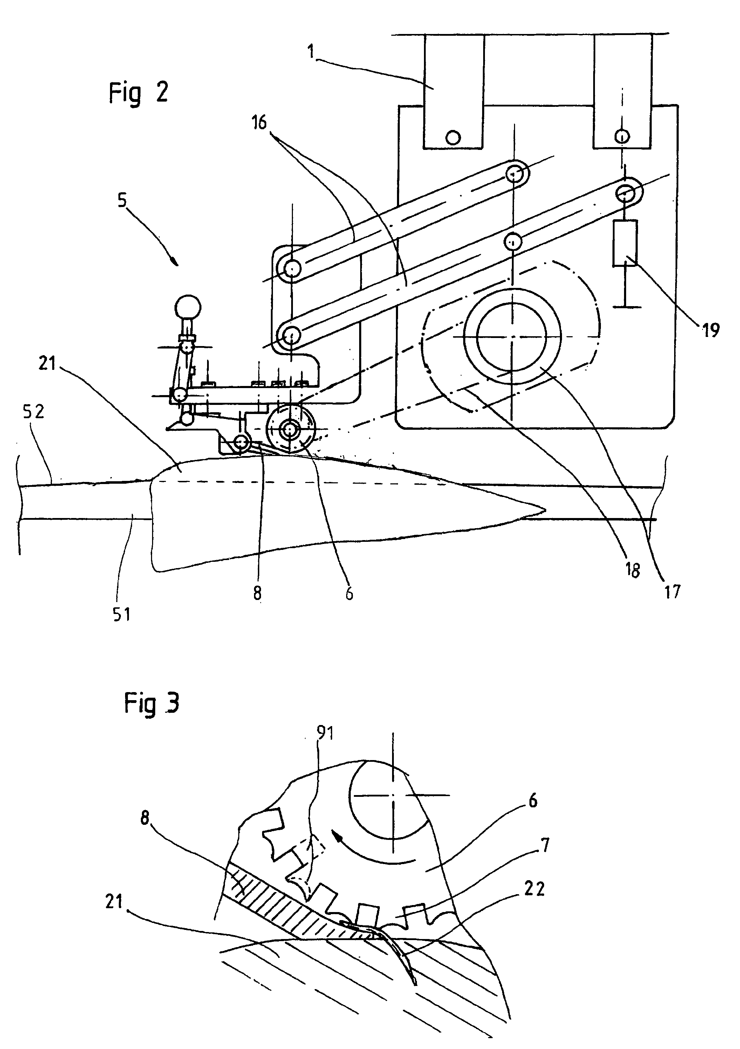

Figure 1 shows a overall view of the set-up of the apparatus, showing a side view of the bone removing unit and the conveyor for transporting the meat the bones are to be removed from. A conveyor (2) having an in-feed end (3) and out-feed end (4) resting on a supporting frame structure (1). On the frame (1) and above the conveyor (2) a bone removing unit (5) is moveably hinged. The bone removing unit (5) is hinged to the frame (1) via two individually movable arms (16). A motor (17) for rotating the axle (6) of the bone removing unit (5) is connected to the bone remover via belt transmission (18). The up- and downward movement of the unit (5) is done via moveable arms (16) regulated via a spring or a lifting/lowering device numbered 19 on the drawing. The number 19 on figure 1 and 2 can also represent a servo motor arranged to raise and lower the bone removing unit (5) towards and from the fish on the conveyor. By the use of a servo motor (19) the movement of the bone removing unit can be controlled much easier. It is even possible to have the bone removing unit to follow a specific curve path when it is in contact with the fish. The pressure (depth) can be increased in the "bone located are" and then released immediately after. The arms (16) are arranged parallel to each other and therefor allow parallel up- and downward movement of the unit (5). Thereby the placement of the unit (5) is independent with respect to the conveyor (2) plane and/or the thickness of the fish or meat portion. The bone removing unit (5) comprise two main parts, a rotatably driven axle (6) and a counter pressure element (8). Further, an optional feature is a first pressure element (12) located immediately before the axle (5) and counter pressure element (8). The pressure element (12) function as a height adjuster in cases when the up and downward movement of the bone removing unit (5) is not controlled by for example a servo motor (19). The element (12) follows the contour of the fish and adjust thereby how close the axle (5) with the engagement elements (7) and the counter pressure element (8) comes to contact with the surface of the meat. The conveyor surface is elevated at least in the area where the bone removing unit is brought into to the filets. The elevation means (51) is shown in more details on figure 2 to 6, but in principle as shown extend longitudinally along the conveyor and thereby forms an edge (52) which elevates a particular portion of the filet. The figure further illustrate the conveyance of fish filets (21) from the in-feed end (3) under the bone removing unit (5) and towards the out-feed end (4). Fish filets (21) are arranged on an elevation means (51) on the conveyor (2), thereby bringing the particular portion where the bones are located in closer to the bone removing unit (5).

Figure 2 shows in more close-up details the arrangement of the bone removing unit (5), how it is hinged to the frame (1) and how the up- and downward movement of the unit (5) is performed. The contact between the bone removing unit (5) and the elevated portion of the filet is further illustrated in greater details. A fish filet (21) is arranged on the elevation means (51) so that portion the bones are to be removed from is sitting on edge (52) of the elevation means (51).

Figure 3 shows the removal of a pin-bone (22) from the fish filet (21). The pin-bones (22) are primarily located in a area corresponding to a line of the spine of the fish. By the way of elevating this non-skin side of the filet above other portion of the filet the bones can be much easier removed and only a small portion of the meat contacted. When the filet is again placed in normal flat position the area that was in contact with the bone removing unit is almost non-visible. The counter pressure element (8) interact with the engagement elements (7) of the rotatably driven axle (6) of the bone removing unit. The bone (22) is intercepted between the counter pressure element and the engagement element and thereby pulled out of the fish filet. The engagement element (7) or teeth can be of varying size and form as exemplified additional recess (91) depth.

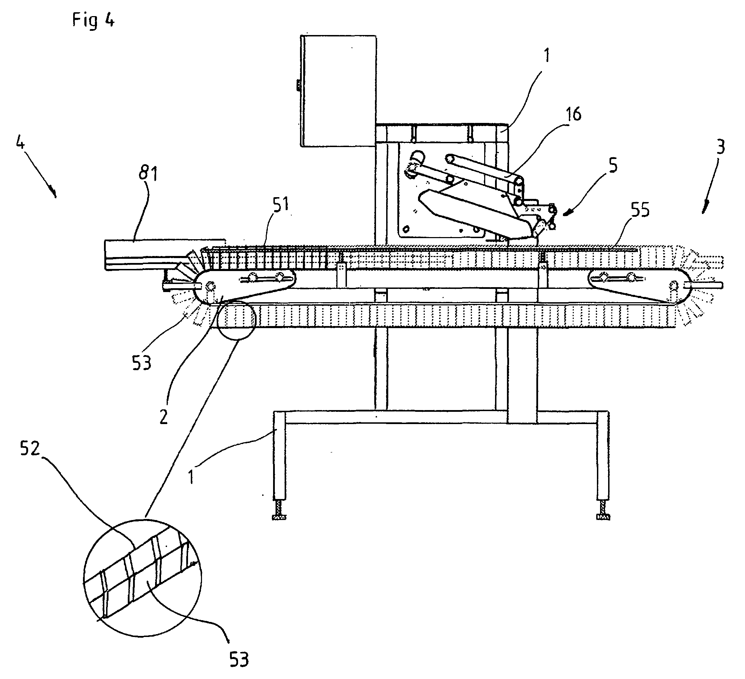

Figure 4 shows side view of the apparatus. An elevation means (51) is arranged on the conveyor (2). As illustrated in the detailed part of the figure one example of the elevation is shown where it is made of a number of triangular formed units (53) arranged on the conveyor and form a rim or rail along the entire conveyor (2). By arranging the filets on the edge of this rim or rail (52) it is possible to bring the bone removing unit closer into contact with the area in the filet where the bones are primarily located in. A in-feed channels (81) are further shown for placing the fish filets prior to entering into the conveyor.

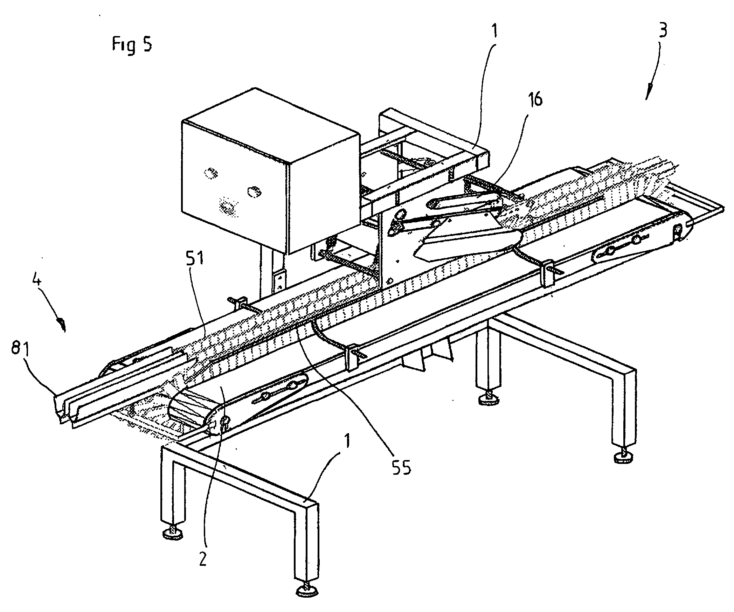

Figure 5 shows a perspective view of apparatus with one preferred embodiment of the elevation means (51) on the conveyor (2). There are shown three elevation means (51). On the outside there are pressure means or devices (55) keeping a side pressure on the fillets arranged on the elevation means (51). By pressing on the sides the portions of the filets being placed in-between and enveloped thereby are held in their position while the bone removal is taken place.

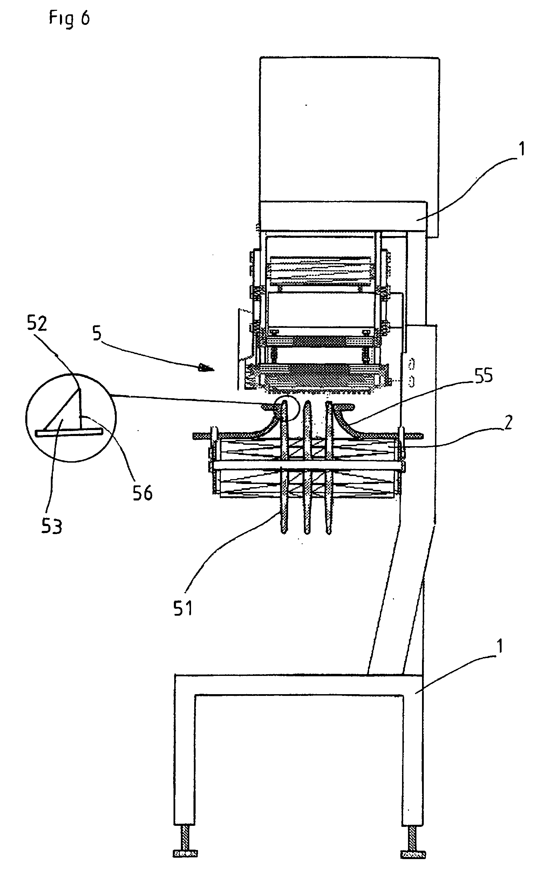

Figure 6 shows the apparatus seen from the end section. Three elevation units rail (53) is are arranged side by side on the conveyor (2). Outside there are pressure means (55) pressing the rails together and thereby the filet portion placed therein. A cross sectional cut of the upwardly extending edge, a triangular formed (53) link, having one side (56) approximately vertical. The angle of the top rim (52) can vary from considerably or from 15° up to almost 160° in specific instances depending of the type of product to be processes and the importance of bone removal rate in respect to the yield, e.g. how much meat is removed during the bone removal.

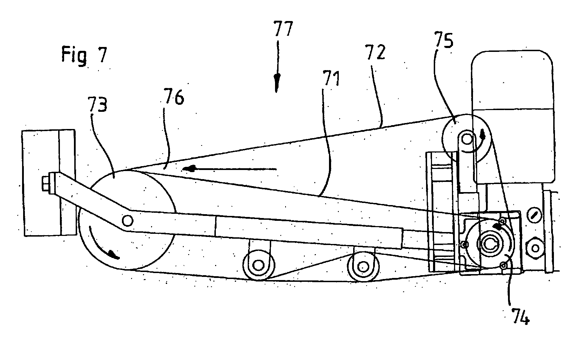

Figure 7 illustrates one example of a specific long bone direction means and/or bone removal unit (77). This unit comprises a pair of belt or chain drive (71, 72) running over a set of three wheels (73, 74, 75), where of both belt run over two of the same wheels ( 73, 74) but the third wheels (75) being a different. This resulting in the belts forming two triangular whereof one falls within the other and belt together forms a v-shaped channel (76) narrowing in the conveyor direction and end where the belts falls together over the front wheel (73).

It thus will be appreciated that the objects of the present invention have been fully and effectively accomplished. It will be realised, however, that the foregoing preferred specific embodiment has been shown and described for the purpose of this invention and are subject to change without departure from its basic principles.

## Claims

1. Apparatus for removing bones, such as pin-bones from meat such as fish filet, said pin bones being primarily located in a area along a line corresponding to the spine of the fish, said apparatus comprising:
a frame (1),
a conveyor (2) arranged on said frame for advancing said fish filet in a conveying direction, as well as supporting said filet during the bone removal process,
a bone removing unit (15) arranged on said frame, said bone removing unit being moveably hinged to the frame in the area above the conveyor for the purpose of bone removal as the filet is advanced along said conveyor,
**characterised in that** the conveyor comprises:
upwardly extending edge (52) for elevating a particular area of the filet, above the conveyor surface, preferably the area corresponding to the spine, in such a manner the bone removal unit is allowed to be brought into contact to that particular area to remove the bones that are primarily located there in.

2. Apparatus according to claim 1 wherein said upwardly extending edge comprises an elevation along at least part of the upwardly facing portion of the conveyor.

3. Apparatus according to claim 1 or 2, wherein the upwardly extending edge comprises and longitudinal elevation along at least part of the upwardly facing portion of the conveyor.

4. Apparatus according to claim 1, 2 or 3, wherein said upwardly extending edge further comprises a support means at least partly enveloping and supporting the down-slanting portion of the filet during the bone removal process.

5. Apparatus according any of the claims 1 - 4, wherein said upwardly extending edge comprises a v-formed top section.

6. Apparatus according any of the claims 1 - 5, wherein said upwardly extending edge having an angel of approximately of 15 - 160°.

7. Apparatus according to one or more of the claims 1 - 5, wherein said support means further comprises a side pressure devise.

8. Apparatus according to one or more of the claims 1 - 6, wherein said conveyor comprises an elevation means, at least partly supporting the filet horizontally during the bone removal process preferably in the area corresponding to the spine, thereby allowing the bone removing unit to be brought into contact to the area where the bones are primarily located, and a supporting means, at least partly supporting vertical alignment of the non-processed part of the filet in the period while the bone removal unit is in contact thereto.

9. Apparatus according to one or more of the preceding claims wherein the conveyor comprises one or more guiding slot defining a longitudinal pocket, at least partly enveloping said fillet arranged therein, said slot being formed by longitudinal rails having an upper guiding edge at least partly supporting the skin side of said filet along a line corresponding to the spine and in such a manner that the meat area where said bones are primarily located in is facing said bone removal unit.

10. Apparatus according to one or more of the preceding claims wherein an additional bone direction/removing -unit is added on the frame comprising one or more endless belt/chain mechanism running over at least one common drive wheel forming an channel tangential to the common drive wheel wherein the bones can be captured either between the wheel and the belt of between two belts.

11. Apparatus according to one or more of the preceding claims wherein the up and downward movement of the bone removing unit is controlled by a servo motor unit.

12. Method of removing bones, such as pin-bones from meat such as fish filets, said bones being primarily located in the meat along a line corresponding to the spine of the fish, said method comprising the steps of:
arranging said filet on a conveyor surface,
conveying said filet along said conveyor surface,
elevating a particular portion of the filet corresponding to the spine of the fish above the surface of the conveyor,
bringing a bone removal unit into contact with the elevated portion of the filet as it is conveyed along said conveyor and thereby allowing the bone removal unit to be brought into contact to the area where the bones are primarily located in.

13. Method according to claim 11, wherein further to said elevation of the particular portion non-elevated portion is longitudinal supported in such a manner that the portion corresponding to the spine is kept elevated and in optimal position for the bone removal process.

14. Method according to claim 11 or 12, wherein the up and downward movement of the bone removing unit follows a path representing the contour and the position of the bones in the respective area of the fish.

## Patentansprüche

1. Gerät zum Entfernen von Gräten, wie zum Beispiel Steckgräten aus Fleisch, wie zum Beispiel Fischfilet, wobei sich die Steckgräten im Wesentlichen in einer Zone entlang einer Linie befinden, die dem Rückgrat des Fischs entspricht, wobei das Gerät Folgendes umfasst:
einen Rahmen (1),
ein Förderband (2), das auf dem Rahmen angeordnet ist, um das Fischfilet in eine Förderrichtung zu befördern, sowie zum Stützen des Filets während des Grätenentfemungsprozesses,
eine Grätenentfernungseinheit (5), angeordnet auf dem Rahmen, wobei die Grätenentfemungseinheit (5) beweglich mit Scharnieren an dem Rahmen in der Zone über dem Förderband zum Grätenentfernen, während der Fisch auf dem Förderband befördert wird, angelenkt ist,
**dadurch gekennzeichnet, dass** das Förderband Folgendes umfasst:
nach oben reichende Kante (52) zum Anheben einer bestimmten Zone des Filets über die Förderbandfläche, vorzugsweise die Zone, die dem Rückgrat entspricht, sodass die Grätenentfernungseinheit (5) mit der bestimmten Zone in Berührung gebracht werden kann, um die Gräten zu entfernen, die sich im Wesentlichen hier befinden.

2. Gerät nach Anspruch 1, wobei die aufwärts reichende Kante eine Erhöhung entlang mindestens eines Teils des nach oben zeigenden Abschnitts des Förderbands umfasst.

3. Gerät nach Anspruch 1 oder 2, wobei die nach oben reichende Kante eine Längserhöhung entlang mindestens eines Teils des nach oben zeigenden Abschnitts des Förderbands umfasst.

4. Gerät nach Anspruch 1, 2 oder 3, wobei die nach oben reichende Kante ferner ein Stützmittel umfasst, das den nach unten geneigten Abschnitts des Filets während des Grätenentfernungsprozesses umgibt und stützt.

5. Gerät nach einem der Ansprüche 1 bis 4, wobei die nach oben reichende Kante einen V-förmigen Oberabschnitt umfasst.

6. Gerät nach einem der Ansprüche 1 bis 5, wobei die nach oben reichende Kante einen Winkel von etwa 15 - 160° hat.

7. Gerät nach einem oder mehreren der Ansprüche 1 bis 5, wobei das Stützmittel femer eine Seitendruckvorrichtung umfasst.

8. Gerät nach einem oder mehreren der Ansprüche 1 bis 6, wobei das Förderband ein Hubmittel umfasst, das das Filet zumindest teilweise horizontal während des Grätenentfemungsprozesses vorzugsweise in der Zone stützt, die dem Rückgrat entspricht, sodass es der Grätenentfernungseinheit erlaubt wird, mit der Zone in Berührung gebracht zu werden, in der sich die Gräten im Wesentlichen befinden, und ein Stützmittel, das das senkrechte Ausrichten des nicht verarbeitenden Teils des Filets in der Periode, in der die Grätenentfemungseinheit damit in Berührung ist, teilweise stützt.

9. Gerät nach einem oder mehreren der vorhergehenden Ansprüche, wobei das Förderband einen oder mehrere Führungsschlitze umfasst, die eine Längstasche definieren, die das darin angeordnete Filet zumindest teilweise umgibt, wobei der Schlitz durch Längsschienen gebildet wird, die eine obere Führungskante haben, die zumindest teilweise die Hautseite des Filets entlang einer Linie, die dem Rückgrat entspricht, so stützt, dass die Fleischzone, in der sich die Gräten im Wesentlichen befinden, zur Grätenentfernungseinheit gerichtet ist.

10. Gerät nach einem oder mehreren der vorhergehenden Ansprüche, wobei eine zusätzliche Grätenausrichtungs-/Entfernungseinheit auf dem Rahmen hinzugefügt wird, die einen oder mehrere Endlosriemen-/Kettenmechanismen umfasst, die über mindestens ein gemeinsames Antriebsrad laufen, die einen tangentialen Kanal zum gemeinsamen Antriebsrad bilden, in dem die Gräten entweder zwischen dem Rad und dem Riemen oder zwischen zwei Riemen gefangen werden können.

11. Gerät nach einem oder mehreren der vorhergehenden Ansprüche, wobei die Auf- und Abwärtsbewegung der Grätenentfemungseinheit von einem Servomotor gesteuert wird.

12. Verfahren zum Entfernen von Gräten, wie zum Beispiel von Steckgräten aus Fleisch, wie zum Beispiel Fischfilets, wobei sich die Gräten im Wesentlichen in dem Fleisch entlang einer Linie, die dem Rückgrat des Fischs entspricht, befinden, wobei das Verfahren die folgenden Schritte umfasst:
Anordnen des Filets auf einer Förderbandfläche,
Befördern des Filets entlang der Förderbandfläche,
Anheben eines bestimmten Abschnitts des Filets, der dem Rückgrat des Fischs entspricht, über die Oberfläche des Förderbands,
wobei eine Grätenentfernungseinheit mit dem angehobenen Teil des Filets in Berührung gebracht wird, während dieses entlang des Förderbands befördert wird, sodass es der Grätenentfernungseinheit erlaubt wird, mit der Zone, in der sich die Gräten im Wesentlichen befinden, in Berührung gebracht zu werden.

13. Verfahren nach Anspruch 11, wobei zusätzlich zum Anheben des bestimmten Abschnitts der nicht angehobene Abschnitt längs so gestützt wird, dass der Abschnitt, der dem Rückgrat entspricht, angehoben und in optimaler Position für den Grätenentfernungsprozess gehalten wird.

14. Verfahren nach Anspruch 11 oder 12, bei dem die Auf- und Abwärtsbewegung der Grätenentfernungseinheit einem Verlauf folgt, der die Kontur und die Position der Gräten in der jeweiligen Zone des Fischs darstellt.

## Revendications

1. Appareil pour enlever des arêtes, en particulier des arêtes semblables à des épingles dans de la viande telle des filets de poisson, lesdites arêtes semblables à des épingles étant essentiellement situées dans une zone le long d'une ligne correspondant à l'arête dorsale du poisson, ledit appareil comprenant :
un cadre (1),
un moyen d'acheminement (2) aménagé sur ledit cadre pour faire avancer ledit filet de poisson dans une direction d'acheminement, ainsi que pour supporter ledit filet pendant le processus d'enlèvement de l'arête,
une unité d'enlèvement des arêtes étant aménagée sur ledit cadre, ladite unité d'enlèvement des arêtes étant articulée de manière mobile sur le cadre dans la zone au-dessus du moyen d'acheminement dans le but d'enlever les arêtes lorsque le filet est déplacé vers l'avant le long dudit moyen d'acheminement,
**caractérisé en ce que** le moyen d'acheminement comprenne :
un bord s'étendant vers le haut (52) pour élever une zone particulière du filet au-dessus du plan de travail du moyen d'acheminement, de préférence la zone correspondant à l'arête dorsale, de manière à ce que l'unité d'enlèvement des arêtes puisse être amenée en contact avec cette zone particulière pour enlever les arêtes qui sont essentiellement localisées à cet endroit.

2. Appareil selon la revendication 1, où ledit bord s'étendant vers le haut comprend une élévation le long au moins d'une partie de la portion faisant face vers le haut du moyen d'acheminement.

3. Appareil selon l'une quelconque des revendications 1 ou 2, où le bord s'étendant vers le haut comprend une élévation longitudinale le long au moins d'un partie de la portion faisant face vers le haut du moyen d'acheminement.

4. Appareil selon l'une quelconque des revendications 1, 2 ou 3, où ledit bord s'étendant vers le haut comprend par ailleurs un moyen de support enveloppant et supportant au moins partiellement la portion inclinée vers le bas du filet pendant le processus d'enlèvement des arêtes.

5. Appareil selon l'une quelconque des revendications 1 à 4, où ledit bord s'étendant vers le haut comprend une section du haut en forme de v.

6. Appareil selon l'une quelconque des revendications 1 à 5, où ledit bord s'étendant vers le haut possède un angle d'environ 15-160°.

7. Appareil selon l'une quelconque ou plusieurs des revendications 1 à 5, où ledit moyen de support comprend par ailleurs un dispositif de pression latérale.

8. Appareil selon l'une quelconque ou plusieurs des revendications 1 à 6, où ledit moyen d'acheminement comprend un moyen d'élévation supportant au moins partiellement le filet de manière horizontale pendant le processus d'enlèvement des arêtes, de préférence dans la zone correspondant à l'arête dorsale, permettant ainsi à l'unité d'enlèvement des arêtes d'être amenée en contact avec la zone où les arêtes sont essentiellement situées, et un moyen de support qui supporte au moins partiellement un alignement vertical de la partie non traitée du filet pendant la période au cours de laquelle l'unité d'enlèvement des arêtes est en contact avec.

9. Appareil selon l'une quelconque ou plusieurs des revendications précédentes, où le moyen d'acheminement comprend une ou plusieurs fentes de guidage définissant une poche longitudinale qui enveloppe au moins partiellement ledit filet disposé à l'intérieur, ladite fente étant formée par des rails longitudinaux ayant un rebord de guidage supérieur qui supporte au moins en partie le côté avec la peau dudit filet le long d'une ligne correspondant à l'arête dorsale, et ce de manière à ce que la zone de la viande où lesdites arêtes sont essentiellement logées, fasse face à ladite unité d'enlèvement.

10. Appareil selon l'une quelconque ou plusieurs des revendications précédentes, où une unité supplémentaire de conduite/d'enlèvement est ajoutée sur le cadre, qui comprend un ou plusieurs mécanismes à courroie/chaîne passant par au moins une roue motrice commune formant un canal tangentiel par rapport à la roue motrice commune dans lequel les arêtes peuvent être capturées soit entre la roue et la courroie ou entre deux courroies.

11. Appareil selon l'une quelconque ou plusieurs des revendications précédentes, où le mouvement vers le haut et le bas de l'unité d'enlèvement des arêtes est contrôlé par une unité à servomoteur.

12. Méthode d'enlèvement des arêtes telles des arêtes semblables à des épingles dans de la viande telle des filets de poisson, lesdites arêtes étant avant tout situées dans la chair le long d'une ligne correspondant à l'arête dorsale du poisson, ladite méthode comprenant les étapes suivantes :
disposition dudit filet sur le plan de travail d'un moyen d'acheminement,
acheminement dudit filet le long dudit plan de travail du moyen d'acheminement,
élévation d'une portion particulière du filet correspondant à l'arête dorsale du poisson au-dessus du plan de travail du moyen d'acheminement,
mise en contact d'une unité d'enlèvement des arêtes avec la portion en élévation du filet lorsqu'il est acheminé le long dudit moyen d'acheminement et en permettant ainsi à l'unité d'enlèvement des arêtes d'être amenée en contact avec la zone où les arêtes sont principalement logées.

13. Méthode selon la revendication 11, dans laquelle après ladite élévation de la portion particulière, la portion non élevée est supportée longitudinalement de manière à ce que la portion correspondant à l'arête dorsale reste en élévation et dans une position optimale pour le processus d'enlèvement des arêtes.

14. Méthode selon l'une quelconque des revendications 11 ou 12, où le mouvement vers le haut et le bas de l'unité d'enlèvement des arêtes suit une trajectoire représentant le contour et la position des arêtes dans la zone respective du poisson.
